# FASCICULE DE BREVET EUROPEEN

(11) **EP 3 746 317 B1**
(45) Date de publication et mention de la délivrance du brevet: **23.02.2022**
(21) Numéro de dépôt: 19708351.2
(22) Date de dépôt: 29.01.2019
(51) Int. Cl.: B60H 1/00, F25B 5/02, F25B 6/02, F25B 9/00, F25B 25/00, F25B 40/00, F25B 41/00, F25B 49/02, F25B 9/08, B60H 1/32, H01M 10/625, H01M 10/663

(54) **CIRCUIT DE FLUIDE RÉFRIGÉRANT POUR VÉHICULE**
KÄLTEMITTELKREISLAUF FÜR EIN FAHRZEUG
REFRIGERANT CIRCUIT FOR VEHICLE

(30) Priorité: 30.01.2018 FR 1850762; 09.03.2018 FR 1852045
(43) Date de publication de la demande: 09.12.2020
(73) Titulaire: Valeo Systemes Thermiques, 78320 Le Mesnil-Saint-Denis (FR)
(72) Inventeur: YAHIA, Mohamed, 78320 Le Mesnil Saint-Denis (FR); NICOLAS, Bertrand, 78320 Le Mesnil Saint-Denis (FR)
(74) Mandataire: Valeo Systèmes Thermiques
(86) Numéro de dépôt international: PCT/FR2019/050190
(87) Numéro de publication internationale: WO 2019/150034

(56) Documents cités:
- EP-A1- 2 136 161
- EP-A1- 2 678 175
- EP-B1- 2 678 175
- FR-A1- 2 936 445

## Description

Le domaine de la présente invention est celui des circuits de fluide réfrigérant pour véhicule, notamment pour véhicule automobile.

Les véhicules automobiles sont couramment équipés d'un circuit de fluide réfrigérant utilisé pour refroidir différentes zones ou différents composants du véhicule. Il est notamment connu d'utiliser ce circuit de fluide réfrigérant pour traiter thermiquement un flux d'air envoyé dans l'habitacle du véhicule équipé d'un tel circuit.

Dans une autre application de ce circuit, il est connu de l'utiliser pour refroidir un dispositif de stockage électrique du véhicule, ce dernier étant utilisé pour fournir une énergie à un moteur électrique capable de mettre en mouvement le véhicule. Le circuit de fluide réfrigérant fournit ainsi l'énergie capable de refroidir le dispositif de stockage électrique pendant son utilisation en phases de roulage. Le circuit de fluide réfrigérant est ainsi dimensionné pour refroidir ce dispositif de stockage électrique.

Le document EP 2 678 175 A1 divulgue un circuit de réfrigérant comprenant un éjecteur et une batterie.

Lorsque ce circuit de fluide réfrigérant assure simultanément le traitement thermique de l'habitacle et le traitement thermique du dispositif de stockage, ce circuit est soumis à de très fortes contraintes qui amènent le circuit aux limites de ses capacités. C'est notamment le cas quand le dispositif de stockage électrique est utilisé d'une manière qui provoque un échauffement important de celui-ci. Un exemple de cette situation est notamment une phase de charge rapide du dispositif de stockage. Elle consiste à charger le dispositif de stockage électrique sous une tension et un ampérage élevés, de manière à charger le dispositif de stockage électrique en un temps court de quelques dizaines de minutes. Cette charge rapide implique un échauffement du dispositif de stockage électrique qu'il convient de traiter. Par ailleurs, il faut considérer la possibilité de maintenir un niveau de confort thermique acceptable à l'intérieur de l'habitacle, soit car les occupants du véhicule restent à l'intérieur du véhicule tout ou partie du temps de charge mentionné ci-dessus, soit pour anticiper le retour de ces occupants et éviter tous désagrément d'ordre thermique. Il faut alors également traiter thermiquement l'habitacle pendant cette charge rapide pour maintenir des conditions de confort acceptables, notamment quand la température extérieure au véhicule dépasse 30°C. Ces deux demandes en refroidissement impliquent un dimensionnement du système qui le rend peu compatible avec les contraintes des véhicules automobiles actuels, notamment les véhicules mus par un moteur électrique.

Le problème technique réside donc dans la capacité à contrôler les performances d'un circuit de fluide réfrigérant qui est configuré d'une part pour dissiper les calories générées par le dispositif de stockage électrique lorsqu'il est soumis à de fortes contraintes, par exemple pendant une charge rapide, et d'autre part à refroidir l'habitacle, tant en limitant la consommation et/ou l'encombrement et/ou les nuisances sonores d'un système capable de remplir simultanément ces deux fonctions. Ces deux refroidissements s'opèrent normalement à des températures d'évaporation différentes, le refroidissement du dispositif de stockage électrique se faisant à une température d'évaporation plus haute. Ces deux refroidissements impliquent deux puissances de refroidissement très variables, allant de 1 kW et pouvant dépasser 5 kW.

L'invention s'inscrit dans ce contexte et propose une solution technique qui résout ce problème, en tirant bénéfice d'une surchauffe contrôlée du circuit de fluide réfrigérant du véhicule, permettant de réguler la puissance de traitement thermique du dispositif de stockage électrique sans nuire au traitement thermiquement du flux d'air destiné à l'habitacle, ni nuire à la viabilité des composants dudit circuit de fluide réfrigérant.

L'invention a donc pour objet un circuit de fluide réfrigérant d'un véhicule comprenant au moins un dispositif de compression de fluide réfrigérant, un éjecteur de fluide réfrigérant comprenant au moins une entrée primaire, une entrée secondaire et une sortie, le circuit de fluide réfrigérant comprenant un premier échangeur thermique agencé pour être traversé par un flux d'air extérieur à un habitacle du véhicule, un deuxième échangeur thermique agencé pour être traversé par un flux d'air intérieur envoyé dans l'habitacle, un échangeur de chaleur couplé thermiquement à un dispositif de stockage électrique du véhicule, au moins un dispositif d'accumulation, caractérisé en ce que le circuit de fluide réfrigérant comprend une première branche porteuse de l'échangeur de chaleur, et une deuxième branche raccordée à l'entrée secondaire de l'éjecteur et qui comporte le dispositif d'accumulation ainsi que le deuxième échangeur thermique, la première branche et la deuxième branche étant disposées en parallèle l'une par rapport à l'autre.

Le circuit de fluide réfrigérant est un circuit fermé qui met en œuvre un cycle thermodynamique. Le dispositif de compression de fluide réfrigérant, que comprend le circuit de fluide réfrigérant, permet de comprimer et de mettre en circulation le fluide réfrigérant.

Le fluide réfrigérant mis en œuvre dans le circuit de fluide réfrigérant selon l'invention est par exemple un fluide sous-critique, tel que celui connu sous la référence R134A ou R1234YF. Il peut également s'agir d'un fluide super critique, par exemple un fluide naturel de type R744.

Dans ce circuit, l'éjecteur opère tel un organe de détente. L'éjecteur est en effet apte à faire passer le fluide réfrigérant d'une haute pression et d'une haute température à une basse pression et à une basse température.

Le premier échangeur thermique est apte à fonctionner en évaporateur ou en condenseur quand il est traversé par le flux d'air extérieur au véhicule. Le deuxième échangeur thermique est apte à fonctionner comme évaporateur, traversés par le flux d'air intérieur destiné à l'habitacle. Le deuxième échangeur thermique prend par exemple place au sein d'une installation de ventilation, de chauffage et de climatisation équipant le véhicule.

L'échangeur de chaleur est configuré pour traiter thermiquement le dispositif de stockage électrique du véhicule. L'échangeur de chaleur échange des calories entre le fluide réfrigérant et le dispositif de stockage électrique du véhicule, soit directement, c'est-à-dire par convection entre l'échangeur de chaleur et le dispositif de stockage électrique, soit indirectement via une boucle de circulation d'un fluide caloporteur, cette dernière étant destinée à transporter les calories du dispositif de stockage électrique vers l'échangeur de chaleur. On comprend donc que le refroidissement du dispositif de stockage électrique peut être indirect. De manière alternative, l'échangeur de chaleur peut être au contact du dispositif de stockage électrique. Dans un tel cas, le refroidissement du dispositif de stockage électrique est direct.

Comme la première branche est parallèle à la deuxième branche, le fluide réfrigérant traversant l'échangeur de chaleur ne passe pas au travers du dispositif d'accumulation. Ainsi, une partie du fluide réfrigérant peut contourner le dispositif d'accumulation. L'état du fluide réfrigérant qui entre alors dans le dispositif de compression ne dépend donc pas seulement du dispositif d'accumulation, mais dépend également de l'état du fluide réfrigérant issu de la première branche. Par ailleurs, les pertes de charge sont limitées lorsque le fluide réfrigérant contourne le dispositif d'accumulation en passant par la première branche. Cette partie du fluide contournant l'accumulateur peut être alors en état de vapeur surchauffée.

Lors du refroidissement du dispositif de stockage électrique, l'échangeur de chaleur peut générer une surchauffe du fluide réfrigérant qui sort de l'échangeur de chaleur, en amont du dispositif de compression. Cette surchauffe peut être modérée, par exemple inférieure à 10°C, ou alors peut être plus significative, par exemple jusqu'à être supérieure à +15°C, en entrée du dispositif de compression. Elle est induite par l'échangeur de chaleur fonctionnant en évaporateur. Un débit de fluide réfrigérant plus faible dans l'échangeur de chaleur garantit cette surchauffe. La puissance de refroidissement de dispositif de stockage électrique peut, par cette modulation du débit de fluide réfrigérant, être contrôlée c'est-à-dire diminuée.

Selon un aspect de l'invention, le circuit de fluide réfrigérant comprend un échangeur de chaleur interne qui comprend une première passe et une deuxième passe, la première passe étant disposé entre le premier échangeur thermique et l'entrée primaire de l'éjecteur et la deuxième passe étant apte à alimenter une entrée du dispositif de compression de fluide réfrigérant.

L'échangeur de chaleur interne permet au fluide réfrigérant de réaliser un échange thermique inter-fluide d'une première passe à la deuxième passe. Le même fluide réfrigérant circule en effet au sein des deux passes de l'échangeur de chaleur, mais dans deux états différents. Ainsi, dans une passe, le fluide réfrigérant présente une température plus importante que dans l'autre passe de l'échangeur de chaleur : le transfert de calories opère alors.

Selon un aspect de l'invention, le circuit de fluide réfrigérant comprend un dispositif de contrôle apte à répartir le fluide réfrigérant entre la première branche et la deuxième branche. Le fluide réfrigérant est ainsi réparti entre l'échangeur de chaleur et le dispositif d'accumulation.

Le dispositif de contrôle permet de mettre en œuvre la répartition de fluide réfrigérant dispensé à l'échangeur de chaleur. En déterminant le débit de fluide réfrigérant vers l'échangeur de chaleur, le dispositif de contrôle permet de moduler la puissance de refroidissement de dispositif de stockage électrique.

Selon un aspect de l'invention, le dispositif de contrôle comprend une entrée apte à recevoir le fluide réfrigérant en provenance de la sortie de l'éjecteur, une première sortie apte à alimenter une entrée de l'échangeur de chaleur et une deuxième sortie apte à alimenter la deuxième branche.

Le dispositif de contrôle est un point de divergence du fluide réfrigérant. Il prend la forme d'une vanne trois voies disposée au point de raccordement de la première branche et de la deuxième branche. Le dispositif de contrôle régule ainsi les débits de fluide réfrigérant amenés à traverser la première branche et la deuxième branche. Le fluide réfrigérant entre dans le dispositif de contrôle et y est divisé pour ajuster la puissance de refroidissement de dispositif de stockage électrique.

De façon particulière, le dispositif de contrôle est raccordé électriquement à un module externe agissant sur les débits. Les débits de fluide réfrigérant dispensés dans la première branche et dans la deuxième branche sont alors contrôlés par le module externe au dispositif de contrôle, le module délivrant des consignes au dispositif de contrôle.

Le dispositif de contrôle est paramétré pour qu'un flux, même réduit, de fluide réfrigérant circule continuellement dans la deuxième branche. Dès lors, la deuxième sortie est toujours plus ou moins ouverte. On évite ainsi un désamorçage du dispositif d'accumulation.

Selon un aspect de l'invention, le circuit de fluide réfrigérant comprend un troisième échangeur thermique agencé pour être traversé par le flux d'air intérieur et disposé sur la deuxième branche entre l'éjecteur et le dispositif d'accumulation.

Le troisième échangeur thermique est ainsi situé sur la deuxième branche du circuit. Sur la deuxième branche, on retrouve disposés en série l'éjecteur, le dispositif de contrôle, le troisième échangeur thermique, et le dispositif d'accumulation.

Le troisième échangeur thermique et le deuxième échangeur thermique sont tous deux traversés par le flux d'air intérieur destiné à l'habitacle. Le troisième échangeur thermique et le deuxième échangeur thermique peuvent par exemple être disposés ensemble au sein de l'installation de ventilation, de chauffage et de climatisation. Le flux d'air intérieur les traverse alors successivement.

Selon un aspect de l'invention, le troisième échangeur thermique, du point de vue du flux d'air intérieur, est en amont du deuxième échangeur thermique. Le flux d'air intérieur traverse alors d'abord le troisième échangeur thermique, puis le deuxième échangeur thermique.

Selon un aspect de l'invention, une sortie de l'échangeur de chaleur et la première sortie du dispositif d'accumulation convergent en un premier point de raccordement. La première branche du circuit se situe ainsi entre la première sortie du dispositif de contrôle et le premier point de raccordement.

Selon un aspect de l'invention, le circuit de fluide réfrigérant comprend un quatrième échangeur thermique configuré pour traiter thermiquement le flux d'air intérieur et disposé dans une troisième branche qui s'étend entre une sortie du dispositif de compression et l'entrée primaire de l'éjecteur.

Le quatrième échangeur thermique est apte à fonctionner en condenseur pour chauffer le flux d'air intérieur qui le traverse et qui est destiné à l'habitacle. Il est par exemple associé au troisième échangeur thermique et au deuxième échangeur thermique d'une installation de ventilation, de chauffage et de climatisation. Le flux d'air intérieur les traverse alors successivement. Avantageusement, le quatrième échangeur thermique est du point de vue du flux d'air intérieur, en aval du troisième échangeur thermique et du deuxième échangeur thermique.

Quand le quatrième échangeur thermique fonctionne, l'échangeur de chaleur peut fonctionner en évaporateur, de manière à refroidir le dispositif de stockage électrique. Par ailleurs, le premier échangeur thermique fonctionne en évaporateur quand le quatrième échangeur thermique fonctionne.

Le quatrième échangeur thermique est relié au dispositif de compression par une conduite apte à recevoir le fluide réfrigérant en provenance d'une sortie du dispositif de compression. Ainsi, le quatrième échangeur thermique, lorsqu'il est opérant est alimenté par un fluide réfrigérant que le dispositif de compression à soumis à haute pression et haute température.

La conduite sur laquelle est retrouvé le quatrième échangeur thermique est par ailleurs disposée entre le dispositif de compression et l'entrée primaire de l'éjecteur.

Selon un aspect de l'invention, le circuit de fluide réfrigérant comprend un premier organe de détente disposé dans la deuxième branche entre le dispositif d'accumulation et le deuxième échangeur thermique et un deuxième organe de détente disposé entre le quatrième échangeur thermique et le premier échangeur thermique. Lors de la mise en œuvre du premier échangeur thermique en tant qu'évaporateur, le deuxième organe de détente permet d'alimenter le premier échangeur thermique en fluide réfrigérant basse pression. Le deuxième organe de détente est plus particulièrement disposé entre la première passe de l'échangeur de chaleur interne et le premier échangeur thermique.

Selon un aspect de l'invention, le circuit de fluide réfrigérant comprend le dispositif d'accumulation, appelé premier dispositif d'accumulation, et un deuxième dispositif d'accumulation disposé entre le premier échangeur thermique et l'entrée secondaire de l'éjecteur. Le deuxième dispositif d'accumulation comprend une entrée apte à être alimenté par le premier échangeur thermique, et une sortie raccordée à l'entrée secondaire de l'éjecteur.

Le deuxième dispositif d'accumulation est utilisé lorsque le premier échangeur thermique opère en tant qu'évaporateur et lorsque le quatrième échangeur thermique opère en tant que condenseur. Le deuxième dispositif d'accumulation permet de contenir la variation de la masse circulante du fluide réfrigérant.

L'invention concerne également un système de traitement thermique d'un véhicule comprenant le circuit de fluide réfrigérant tel que précédemment décrit et une boucle de circulation d'un fluide caloporteur qui comprend un cinquième échangeur thermique configuré pour échanger thermiquement avec au moins un dispositif de stockage électrique du véhicule, l'échangeur de chaleur étant configuré pour être parcouru par le fluide réfrigérant et par le fluide caloporteur.

La boucle de circulation de fluide caloporteur est un circuit fermé qui comprend au moins une conduite, l'échangeur de chaleur, le cinquième échangeur thermique et un moyen de mise en circulation apte à permettre la circulation de fluide caloporteur dans la conduite, tel un pompe.

L'échangeur de chaleur du système de traitement thermique selon l'invention est ainsi parti au circuit de fluide réfrigérant et à la boucle de circulation de fluide caloporteur. Il s'agit d'un échangeur de chaleur bi-fluide. Au sein de l'échangeur de chaleur a lieu un transfert d'énergie thermique entre le fluide réfrigérant et le fluide caloporteur : le fluide caloporteur est refroidi.

L'invention concerne également un procédé de contrôle d'une puissance de refroidissement délivrée par un circuit de fluide réfrigérant tel que précédemment décrit, caractérisée en ce qu'on agit sur un débit de fluide réfrigérant circulant dans la première branche pour contrôler la puissance de refroidissement du circuit de fluide réfrigérant.

La gestion du débit de fluide réfrigérant évoqué ci-dessus est mise en œuvre par un dispositif de contrôle, situé en entrée de la première branche et de la deuxième branche et configuré pour répartir le fluide réfrigérant entre la première branche et la deuxième branche.

Selon un aspect de l'invention, le procédé comprend une étape préalable de mise en charge rapide du dispositif de stockage électrique. Lors de la mise en charge rapide du dispositif de stockage électrique, le véhicule est à l'arrêt à une station de charge délivrant une puissance capable de charger totalement la batterie en moins d'une heure.

En situation de charge rapide, le système de traitement thermique adapte le débit de fluide réfrigérant de sorte à ce que la puissance de refroidissement soit élevée, avantageusement maximale. Le débit de fluide réfrigérant, modifié au niveau de l'échanger de chaleur, induit la surchauffe en amont du dispositif de compression.

D'autres caractéristiques, détails et avantages de l'invention ressortiront plus clairement à la lecture de la description donnée ci-après à titre indicatif en relation avec des dessins dans lesquels
- la figure 1 est une vue schématique du circuit de fluide réfrigérant selon l'invention, dans un premier mode de réalisation,
- la figure 2 est une vue schématique du circuit de fluide réfrigérant selon l'invention, dans un deuxième mode de réalisation,
- la figure 3 illustre de manière schématique le circuit montré à la figure 1, exploité selon un premier mode de fonctionnement,
- les figures 4 à 5 illustrent de manière schématique le circuit montré à la figure 2, exploité selon différents modes de fonctionnement.

Il faut tout d'abord noter que les figures exposent l'invention de manière détaillée pour mettre en œuvre l'invention, lesdites figures pouvant bien entendu servir à mieux définir l'invention, le cas échéant. Ces figures sont des représentations schématiques qui illustrent comment est réalisé un circuit de fluide réfrigérant selon l'invention, ce qui le compose et comment un fluide réfrigérant circule en son sein. En particulier, le circuit de fluide réfrigérant selon l'invention comprend principalement au moins un dispositif de compression de fluide réfrigérant, un échangeur de chaleur, des échangeurs thermiques, un éjecteur et un dispositif d'accumulation. Le circuit de fluide réfrigérant est par ailleurs couplé à une boucle de circulation de fluide caloporteur pour former un système de traitement thermique, la boucle de circulation de fluide caloporteur comprenant principalement un moyen de mise en circulation de fluide caloporteur, l'échangeur de chaleur du circuit de fluide réfrigérant évoqué ci-dessus et un échangeur thermique.

Les différents composants sont explicités ci-dessous selon un sens de circulation du fluide considéré, c'est-à-dire le fluide réfrigérant ou le fluide caloporteur. Les termes amont et aval employés dans la description qui suit se réfèrent au sens de circulation dudit fluide.

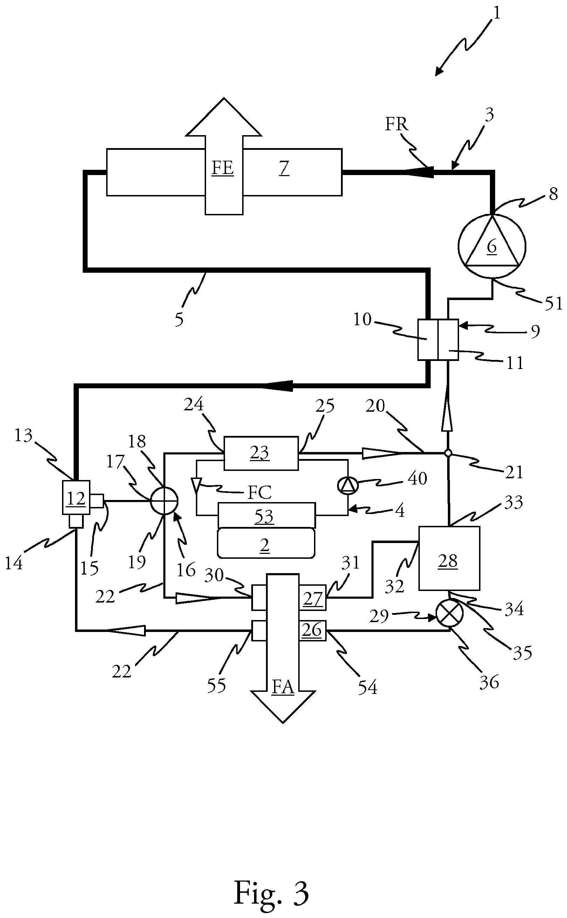

Pour les figures 3 à 5, dans le circuit de fluide réfrigérant et dans la boucle de circulation de fluide caloporteur, des traits symbolisant des conduites reliant les composants sont pleins lorsqu'ils illustrent une portion de circuit où le fluide à considérer circule, tandis que des traits pointillés montrent une absence de circulation dudit fluide. Les composants inopérants sont également signifiés en pointillés.

Dans le circuit de fluide réfrigérant représenté aux figures 3 à 5, le fluide réfrigérant est symbolisé par une flèche longue qui illustre un sens de circulation de ce dernier dans la conduite considérée. Des traits épais et une flèche pleine sont utilisés pour symboliser un fluide réfrigérant en état de haute pression et de haute température. Des traits fins et une flèche évidée correspondent à un fluide en état de basse pression et de basse température.

Dans la boucle de circulation de fluide caloporteur illustrée aux figures 3 à 5, le fluide caloporteur est symbolisé par une flèche courte qui illustre son sens de circulation dans la conduite considérée.

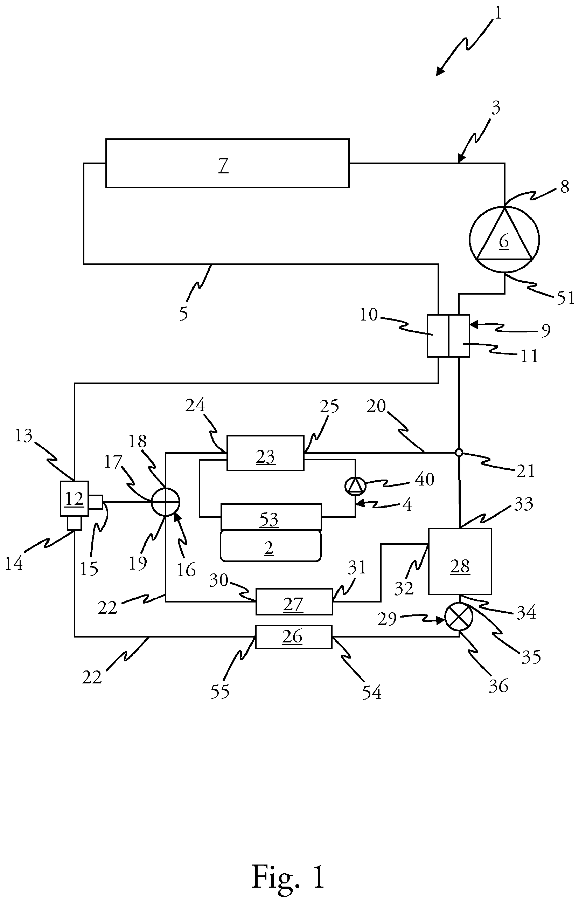

En se référant tout d'abord à la figure 1, on voit un système de traitement thermique 1 selon l'invention, dans un premier mode de réalisation. Ce système de traitement thermique 1 est apte à fonctionner dans un mode permettant de ventiler et de climatiser un habitacle d'un véhicule en parallèle du traitement thermique d'un dispositif de stockage électrique 2 du véhicule en situation de charge rapide. Il se compose d'un circuit 3 de fluide réfrigérant et d'une boucle de circulation 4 de fluide caloporteur. Une mise en situation de ce mode de réalisation sera présentée en figure 3.

Le circuit 3 de fluide réfrigérant est un circuit fermé qui comprend un réseau de conduites reliant les composants du circuit 3 de fluide réfrigérant. Le réseau de conduites est constitué de telle sorte à ce que certains composants soient disposés en série et d'autres en parallèle. Le réseau de conduite comporte ainsi une conduite principale 5 et des branches détaillées par ailleurs. Des points de raccordement de conduites mais aussi certains composants servent à raccorder les conduites entre elles.

Le circuit 3 de fluide réfrigérant comprend sur la conduite principale 5 un dispositif de compression 6 du fluide réfrigérant. On notera que le dispositif de compression 6 du fluide réfrigérant peut prendre la forme d'un compresseur électrique, c'est-à-dire d'un compresseur qui comprend un mécanisme de compression, un moteur électrique et une unité de contrôle et de conversion électrique. Le mécanisme de compression du dispositif de compression 6 est mis en rotation par le moteur électrique.

Le circuit 3 de fluide réfrigérant comprend un premier échangeur thermique 7 apte à fonctionner en condenseur et disposé en aval du dispositif de compression 6 du fluide réfrigérant. Ce premier échangeur thermique 7 est disposé entre une sortie 8 du dispositif de compression 6 et un échangeur de chaleur interne 9. Cet échangeur de chaleur interne 9 comporte deux passes, une première passe 10 et une deuxième passe 11. C'est la première passe 10 qui est raccordée au premier échangeur thermique 7.

La première passe 10 de l'échangeur de chaleur interne 9 est apte à alimenter un éjecteur 12. L'éjecteur 12 comporte une entrée primaire 13, une entrée secondaire 14 et une sortie 15. La première passe 10 de l'échangeur de chaleur interne 9 est reliée à l'entrée primaire 13 de l'éjecteur 12. La sortie 15 de l'éjecteur 12 est connectée à un dispositif de contrôle 16. Ce dernier comporte une entrée 17 reliée à la sortie 15 de l'éjecteur 12, ainsi qu'une première sortie 18 et une deuxième sortie 19, faisant du dispositif de contrôle 16 un point de divergence du circuit 3.

La première sortie 18 du dispositif de contrôle 16 alimente une première branche 20 du circuit 3. La deuxième sortie 19 du dispositif de contrôle 16 alimente une deuxième branche 22. La conduite principale 5 s'étend entre le premier point de raccordement 21 et l'entrée primaire 13 de l'éjecteur 12. La première branche 20 s'étend entre la première sortie 18 du dispositif de contrôle 16 et d'un premier point de raccordement 21. La deuxième branche 22 s'étend entre la deuxième sortie 19 du dispositif de contrôle 16 et l'entrée secondaire 14 de l'éjecteur 12.

Sur la première branche 20 du circuit 3, entre la première sortie 18 du dispositif de contrôle 16 et le premier point de raccordement 21, se situe un échangeur de chaleur 23 disposant d'une entrée 24 et d'une sortie 25 propres au circuit 3 de fluide réfrigérant. Cet échangeur de chaleur 23 est par ailleurs disposé dans la boucle de circulation 4 de fluide caloporteur, dans le cas non limitatif d'un traitement thermique indirect du dispositif de stockage électrique 2, comme illustré ici.

On retrouve sur la deuxième branche 22 du circuit 3 un troisième échangeur thermique 27 apte à fonctionner en évaporateur, un deuxième échangeur thermique 26 apte à fonctionner en évaporateur, un dispositif d'accumulation 28 et un organe de détente 29 étant disposés entre le deuxième échangeur thermique 26 et le troisième échangeur thermique 27.

La deuxième sortie 19 du dispositif de contrôle 16 est reliée à une entrée 30 du troisième échangeur thermique 27. Une sortie 31 du troisième échangeur thermique 27 est située en amont du dispositif d'accumulation 28, et plus précisément en amont d'une entrée 32 du dispositif d'accumulation 28. Ce dispositif d'accumulation 28 comporte par ailleurs une première sortie 33, reliée au premier point de raccordement 21, et une deuxième sortie 34, reliée à une entrée 35 de l'organe de détente 29. L'organe de détente 29 a une sortie 36 positionnée en amont d'une entrée 54 du deuxième échangeur thermique 26, une sortie 55 du deuxième échangeur thermique 26 étant amont à l'entrée secondaire 14 de l'éjecteur 12.

La deuxième passe 11 de l'échangeur de chaleur interne 9 est positionnée entre le premier point de raccordement 21 et une entrée 51 du dispositif de compression 6.

La boucle de circulation 4 de fluide caloporteur est un circuit fermé et comporte une conduite de sorte à ce que les composants qu'elle relie sont disposés en série les uns par rapport aux autres.

La boucle de circulation 4 de fluide caloporteur comprend un moyen 40 de mise en circulation de fluide caloporteur, tel une pompe. Le moyen 40 de mise en circulation de fluide caloporteur est disposé en amont à l'échangeur de chaleur 23, selon le sens de circulation du fluide caloporteur dans la conduite. Un cinquième échangeur thermique 53 est placé en aval de l'échangeur de chaleur 23. Ce cinquième échangeur thermique 53 est placé en amont du moyen 40 de mise en circulation de fluide caloporteur. Le cinquième échangeur thermique 53 est en contact physique avec le dispositif de stockage électrique 2 pour le traiter thermiquement, ici pour capter les calories qu'il dissipe.

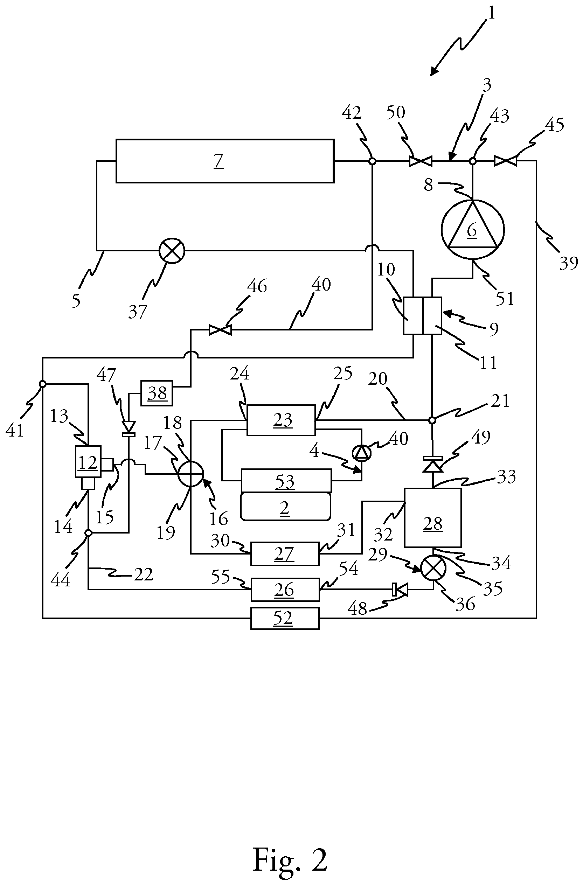

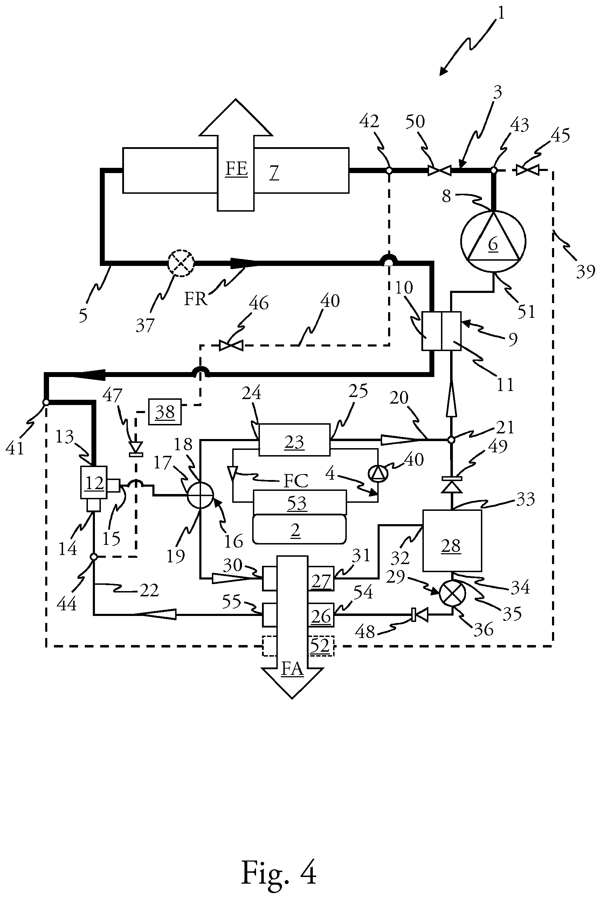

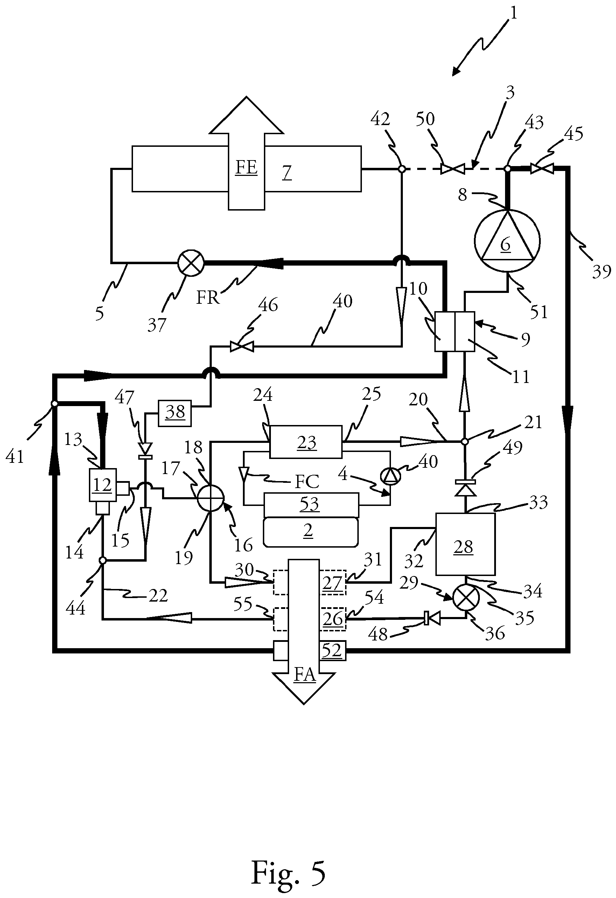

La figure 2 montre le système de traitement thermique 1 selon l'invention, dans un deuxième mode de réalisation. Ce système de traitement thermique 1 est apte à fonctionner dans un mode permettant de ventiler, chauffer et/ou climatiser l'habitacle du véhicule en parallèle du traitement thermique du dispositif de stockage électrique 2 en situation de charge rapide comme cela sera présenté en figures 4 et 5.

Le système de traitement thermique 1 présenté en figure 2 comporte la même base que celle décrite pour la figure 1. Les variations sont les suivantes. Le premier échangeur thermique 7 y est apte à fonctionner en évaporateur ou en condenseur, selon le mode de fonctionnement choisi.

L'organe de détente 29 et le dispositif d'accumulation 28 de la figure 1 sont ci-après dénommés premier organe de détente 29 et premier dispositif d'accumulation 28, du fait de l'existence d'un deuxième organe de détente 37 et d'un deuxième dispositif d'accumulation 38. S'ajoutent à ces composants une troisième branche 39 et une quatrième branche 40, un quatrième échangeur thermique 52, des dispositifs d'arrêt, tels des vannes d'arrêt, et des clapets anti-retours.

La conduite principale 5, qui dans le mode de réalisation de la figure 1 s'étendait entre le premier point de raccordement 21 et l'entrée primaire 13 de l'éjecteur 12, correspond dans le mode de réalisation de la figure 2 à la conduite s'étendant d'un troisième point de raccordement 41 au quatrième point de raccordement 42.

La troisième branche 39 est située entre un deuxième point de raccordement 43 et le troisième point de raccordement 41 et comprend le quatrième échangeur thermique 52. La quatrième branche 40 s'étend entre le quatrième point de raccordement 42 et un cinquième point de raccordement 44 et comprend le deuxième dispositif d'accumulation 38.

La présence de ces points de raccordement offre la possibilité d'utiliser le circuit 3 de fluide réfrigérant pour le chauffage et/ou la climatisation de l'habitacle du véhicule. La troisième branche 39 et la quatrième branche 40 permettent d'activer un mode chauffage de l'habitacle, décrit en figure 5.

La troisième branche 39 comporte les composants suivants : en aval du deuxième point de raccordement 43 se situe un premier dispositif d'arrêt 45, et le quatrième échangeur thermique 52 apte à fonctionner en condenseur est placé entre ce premier dispositif d'arrêt 45 et le troisième point de raccordement 41.

La quatrième branche 40 comporte les composants suivants : en aval du quatrième point de raccordement 42 se situe un deuxième dispositif d'arrêt 46, le deuxième dispositif d'accumulation 38 est positionné en aval du deuxième dispositif d'arrêt 46, et un premier clapet anti-retour 47 est placé entre le deuxième dispositif d'accumulation 38 et le cinquième point de raccordement 44.

Le deuxième organe de détente 37 est placé entre le premier échangeur thermique 7 et la première passe 10 de l'échangeur de chaleur interne 9.

Un deuxième clapet anti-retour 48 est placé entre le premier organe de détente 29 et le deuxième échangeur thermique 26. Un troisième clapet anti-retour 49 est placé entre la première sortie 33 du premier dispositif d'accumulation 28 et le premier point de raccordement 21.

Un troisième dispositif d'arrêt 50 est positionné entre le deuxième point de raccordement 43 et le quatrième point de raccordement 42.

L'ouverture et la fermeture des différents dispositifs d'arrêt permettent de réguler la circulation du fluide réfrigérant dans les branches du circuit 3, pour le chauffage et/ou la climatisation.

La figure 3 illustre le système de traitement thermique 1 selon l'invention, dans un premier mode de réalisation. Le système de traitement thermique 1 est mis en œuvre pour le refroidissement simultané de l'habitacle du véhicule et de son dispositif de stockage électrique 2.

Le dispositif de compression 6 du fluide réfrigérant FR, présent sur la conduite principale 5, fait passer le fluide réfrigérant FR d'une basse pression à une haute pression. Puis, le fluide réfrigérant FR ainsi soumis à haute pression et à haute température traverse le premier échangeur thermique 7, fonctionnant en condenseur. Le passage du fluide réfrigérant FR dans le premier échangeur thermique 7 permet un refroidissement du fluide réfrigérant FR, par échange thermique avec un flux d'air extérieur FE à l'habitacle du véhicule.

Puis le fluide réfrigérant FR circule au sein de l'échangeur de chaleur interne 9, via la première passe 10. Il y subit également un refroidissement, par échange thermique avec le fluide réfrigérant FR circulant dans la deuxième passe 11. Le passage au travers de l'échangeur de chaleur interne 9 n'affecte cependant pas la pression du fluide réfrigérant FR qui se maintien en haute pression.

Le fluide réfrigérant FR haute pression entre dans l'éjecteur 12 via son entrée primaire 13. L'éjecteur 12, fonctionnant tel un organe de détente, fait passer le fluide réfrigérant FR de la haute pression à la basse pression. Ainsi, c'est un fluide réfrigérant FR à basse pression et basse température qui entre dans le dispositif de contrôle 16. Ce fluide réfrigérant FR est réparti par le dispositif de contrôle 16 entre la première branche 20 et la deuxième branche 22 du circuit 3. Le dispositif de contrôle 16 régule également le débit de fluide réfrigérant FR dispensé dans la première branche 20, permettant par exemple une surchauffe du fluide réfrigérant FR en sortie de la première branche 20.

Le fluide réfrigérant FR circule dans la première branche 20 depuis la première sortie 18 du dispositif de contrôle 16. Le fluide réfrigérant FR circule au travers de l'échangeur de chaleur 23, avant de rejoindre le premier point de raccordement 21. Au niveau de l'échangeur de chaleur 23 s'opère un échange thermique entre le fluide réfrigérant FR et le fluide caloporteur FC circulant également dans l'échangeur de chaleur 23, et au sein de la boucle de circulation 4 du fluide caloporteur FC. Le fluide réfrigérant FR capte les calories du fluide caloporteur FC, afin de refroidir le dispositif de stockage électrique 2, via le cinquième échangeur thermique 53 de la boucle de circulation 4 du fluide caloporteur FC, l'échangeur de chaleur 23 fonctionnant en évaporateur. Si le dispositif de stockage électrique 2 ne nécessite pas une grande puissance de refroidissement, le débit de fluide réfrigérant FR au travers de l'échangeur de chaleur 23 est important. Le débit de fluide réfrigérant FR est par contre réduit si le dispositif de stockage électrique 2 nécessite une grande puissance de refroidissement, comme c'est le cas lors d'une charge rapide.

Le fluide réfrigérant FR circule, en parallèle à la première branche 20, dans la deuxième branche 22, depuis la deuxième sortie 19 du dispositif de contrôle 16. Le fluide réfrigérant FR à basse pression et basse température traverse successivement : le troisième échangeur thermique 27, le dispositif d'accumulation 28, l'organe de détente 29 et le deuxième échangeur thermique 26.

Le deuxième échangeur thermique 26 et le troisième échangeur thermique 27 sont parcourus par ailleurs par un flux d'air intérieur FA destiné à l'habitacle du véhicule, faisant subir au fluide réfrigérant FR une double évaporation.

Dans le mode de réalisation présenté en figure 3, ce flux d'air intérieur FA est refroidi, cédant ses calories au fluide réfrigérant FR. Le flux d'air intérieur FA passe tout d'abord au travers du troisième échangeur thermique 27 qui le pré-refroidi alors que le fluide réfrigérant FR gagne en température. Le flux d'air intérieur FA passe ensuite au travers du deuxième échangeur thermique 26 qui est parcouru par ce fluide réfrigérant FR, ce dernier ayant une température plus basse qu'à son entrée dans le troisième échangeur thermique 27 du fait de la détente fournie par l'organe de détente 29. S'opère alors un nouvel échange thermique entre le fluide réfrigérant FR et le flux d'air intérieur FA. Puis le fluide réfrigérant FR rejoint, toujours via la deuxième branche 22 du circuit 3, la sortie secondaire 14 de l'éjecteur 12. On comprend ici que le flux d'air intérieur FA subit un premier refroidissement par échange thermique avec le troisième échangeur thermique 27, puis un second refroidissement par échange thermique avec le deuxième échangeur thermique 26.

Entre le troisième échangeur thermique 27 et le deuxième échangeur thermique 26, le fluide réfrigérant FR entre dans le dispositif d'accumulation 28 par son entrée 32. Le fluide réfrigérant FR y est accumulé, et le fluide réfrigérant FR emprunte soit la première sortie 33 soit la deuxième sortie 34 du dispositif d'accumulation 28. Le fluide réfrigérant FR à l'état liquide sort du dispositif d'accumulation 28 via la deuxième sortie 34, passe l'organe de détente 29 avant de rejoindre le deuxième échangeur thermique 26. Une portion gazeuse du fluide réfrigérant FR sort du dispositif d'accumulation 28 par la première sortie 33, rejoignant ainsi le premier point de raccordement 21, où converge également la première branche 20 du circuit 3.

Du premier point de convergence 21, le fluide réfrigérant FR parcours la deuxième passe 11 de l'échangeur de chaleur interne 9. Un transfert thermique a lieu entre le fluide réfrigérant FR haute température et haute pression de la première passe 10 et le fluide réfrigérant FR basse température et basse pression de la deuxième passe 11. Le fluide réfrigérant FR termine son cycle thermodynamique en regagnant le dispositif de compression 6 par son entrée 51.

En traversant l'échangeur de chaleur 23 opérant en évaporateur, le fluide réfrigérant FR change d'état. Entrant dans l'échangeur de chaleur 23 à l'état diphasique, il en ressort dans un état gazeux, à une température supérieure à celle où le changement d'état liquide/gazeux intervient. Cette surchauffe du fluide réfrigérant FR à l'état gazeux, une fois mélangée au fluide réfrigérant FR qui provient du dispositif d'accumulation 28, améliore la puissance de refroidissement générée par le circuit 3 de fluide réfrigérant FR objet de l'invention.

On considère à présent la boucle de circulation 4 de fluide caloporteur FC. Du moyen 40 de mise en circulation, le fluide caloporteur FC est transmis à l'échangeur de chaleur 23 utilisé comme évaporateur pour refroidir le fluide caloporteur FC via le fluide réfrigérant FR. Le fluide caloporteur FC circule dans le cinquième échangeur thermique 53 où il y récupère les calories dissipées par le dispositif de stockage électrique 2 avant de revenir au niveau de son moyen 40 de mise en circulation. C'est ainsi que le dispositif de stockage électrique 2 est refroidit.

La figure 4 illustre le système de traitement thermique 1 selon le deuxième mode de réalisation, dans un mode de fonctionnement permettant un refroidissement simultané de l'habitacle et du dispositif de stockage électrique 2 du véhicule, notamment lorsque le dispositif de stockage électrique 2 requière une forte puissance de refroidissement, en situation de charge rapide par exemple.

La mise en œuvre du deuxième mode de réalisation amène le fluide réfrigérant FR à circuler de façon similaire à ce qui a été précédemment décrit dans la figure 3, outre la présence de branches et composants supplémentaires.

Le fluide réfrigérant FR circule entre la sortie 8 du dispositif de compression 6 et l'entrée primaire 13 de l'éjecteur 12, notamment via la conduite principale 5, dans un état de haute pression et haute température imposé par le dispositif de compression 6. Le fluide réfrigérant FR est en basse pression et basse température sur le reste du circuit 3 de fluide réfrigérant FR, après son passage au travers de l'éjecteur 12.

Le fluide réfrigérant FR, depuis la sortie 8 du dispositif de compression 6, rejoint le deuxième point de raccordement 43. De ce deuxième point de raccordement 43, il est orienté vers le premier échangeur thermique 7 du fait de la fermeture du premier dispositif d'arrêt 45 et de l'ouverture du troisième dispositif d'arrêt 50. Le fluide réfrigérant FR ne circule ainsi pas dans la troisième branche 39 du circuit 3. Passé le troisième dispositif d'arrêt 50, avant son entrée dans le premier échangeur thermique 7, le fluide réfrigérant FR passe le quatrième point de raccordement 42. Du fait de la fermeture du deuxième dispositif d'arrêt 46, le fluide réfrigérant FR n'emprunte pas la quatrième branche 40 du circuit 3.

Le fluide réfrigérant FR entre dans le premier échangeur thermique 7. Ce dernier fonctionne comme condenseur, traversé par le flux d'air extérieur FE au véhicule. De ce premier échangeur thermique 7, le fluide réfrigérant FR rejoint la première passe 10 de l'échangeur de chaleur interne 9, en ayant traversé le deuxième organe de détente 37, inopérant lorsque le premier échangeur thermique 7 fonctionne en condenseur et lorsque le fluide réfrigérant FR le traverse en ce sens.

Un échange thermique au sein de l'échangeur de chaleur interne 9 a lieu, entre le fluide réfrigérant FR à haute température de la première passe 10 et celui à basse température de la deuxième passe 11. Puis, en aval de la première passe 10 le fluide réfrigérant FR haute pression et haute température arrive à l'entrée primaire 13 de l'éjecteur 12 en ayant traversé le troisième point de raccordement 41.

La sortie 15 de l'éjecteur 12 est reliée au dispositif de contrôle 16, ce dernier étant relié par sa première sortie 18 à la première branche 20 du circuit 3 et par sa deuxième sortie 19 à la deuxième branche 22 du circuit 3. Ce dispositif de contrôle 16 impacte les débits de fluide réfrigérant FR dans la première branche 20 et dans la deuxième branche 22, le fluide réfrigérant FR circulant en parallèle au sein des deux branches comme cela a été décrit pour la figure 3. La circulation du fluide réfrigérant FR entre le premier point de raccordement 21 et le dispositif de compression 6 est également identique à l'illustration de la figure 3, tout comme la circulation du fluide caloporteur FC dans la boucle de circulation 4 du fluide caloporteur FC, permettant de refroidir le dispositif de stockage électrique 2.

Pour mettre en œuvre le mode de fonctionnement présenté en figure 4, la circulation du fluide réfrigérant FR est dépendante de l'ouverture du troisième dispositif d'arrêt 50, et de la fermeture du deuxième dispositif d'arrêt 46 et du premier dispositif d'arrêt 45. Le fluide réfrigérant FR ne circule ni dans la troisième branche 39 ni dans la quatrième branche 40 : de ce fait, le quatrième échangeur thermique 52 est inopérant, tout comme le deuxième dispositif d'accumulation 38. Par ailleurs, le premier clapet anti-retour 47 garanti qu'il n'y ait pas de fluide réfrigérant FR circulant depuis la deuxième branche 22 vers le deuxième dispositif d'accumulation 38. Le deuxième clapet anti retour 48 impose au fluide réfrigérant FR le sens de circulation dans la deuxième branche 22 du circuit 3, et le troisième clapet anti retour 49 évite au fluide réfrigérant FR qui sort de l'échangeur de chaleur 23 de revenir vers la première sortie 33 du premier dispositif d'accumulation 28.

La figure 5 illustre le système de traitement thermique 1 selon le deuxième mode de réalisation, cette fois dans un mode de fonctionnement permettant un chauffage de l'habitacle en parallèle d'un refroidissement du dispositif de stockage électrique 2 du véhicule. Là encore, cette mise en œuvre est possible lorsque le dispositif de stockage électrique 2 requière une forte puissance de refroidissement, en situation de charge rapide par exemple.

Dans ce mode de fonctionnement, la troisième branche 39 et la quatrième branche 40 du circuit 3 sont exploitées. En revanche, le deuxième échangeur thermique 26 et le troisième échangeur thermique 27 sont inopérants. Selon une alternative, il est également possible d'autoriser une circulation de fluide réfrigérant FR dans le deuxième branche 22 pour permettre au deuxième échangeur thermique 26 et/ou au troisième échangeur thermique 27 de fonctionner en évaporateur, et ainsi d'assurer une déshumidification du flux d'air intérieur FA, simultanément à son chauffage.

Le quatrième échangeur thermique 52, formant le condenseur du circuit 3, est actif. C'est ainsi que le chauffage du flux d'air intérieur FA est assuré. Le premier échangeur thermique 7 opère quant à lui en évaporateur, le fluide réfrigérant FR le parcourant en sens opposé à ce qui a pu être décrit en figure 4.

Le fluide réfrigérant FR est soumis à haute pression et haute température au niveau du dispositif de compression 6. Il maintien cet état dans l'ensemble de la troisième branche 39 du circuit 3, ainsi qu'entre le troisième point de raccordement 41 et l'entrée 13 de l'éjecteur 12, et entre le troisième point de raccordement 41 et le deuxième organe de détente 37. Le fluide réfrigérant FR est en état de basse pression et basse température sur le reste du circuit 3.

Le fluide réfrigérant FR en sortie du dispositif de compression 6 arrive au niveau du deuxième point de raccordement 43. Du fait de la fermeture du troisième dispositif d'arrêt 50 et de l'ouverture du premier dispositif d'arrêt 45, il emprunte la troisième branche 39 du circuit 3. Il traverse le premier dispositif d'arrêt 45 avant de passer au travers du quatrième échangeur thermique 52. Ce dernier est parcouru par le flux d'air intérieur FA destiné à l'habitacle du véhicule, qu'il réchauffe tout en condensant le fluide réfrigérant FR.

Le fluide réfrigérant FR arrive alors au troisième point de raccordement 41 : c'est à ce niveau que le fluide réfrigérant FR se scinde ne deux portions pour rejoindre d'un côté l'entrée primaire 13 de l'éjecteur 12, et de l'autre le deuxième organe de détente 37, via la première passe 10 de l'échangeur de chaleur interne 9.

Au niveau de l'éjecteur 12, le fluide réfrigérant FR passe de la haute pression à la basse pression et de la haute température à la basse température. Le fluide réfrigérant FR en sortie de l'éjecteur 12 circule vers le dispositif de contrôle 16. Le dispositif de contrôle 16 dirige le fluide réfrigérant FR, avec un débit approprié, d'une part vers la première branche 20 en empruntant la première sortie 18 du dispositif de contrôle 16 et d'autre part vers la deuxième branche 22 du circuit 3 en empruntant la deuxième sortie 19 du dispositif de contrôle 16, de sorte à maintenir une circulation minimum dans la deuxième branche 22 pour éviter un désamorçage du premier dispositif d'accumulation 28.

Dans la première branche 20, le fluide réfrigérant FR opère tel que décrit dans la figure 3. Il en va de même pour le fonctionnement de l'échangeur de chaleur interne 9 et on se reportera à la description ci-dessous pour sa mise en œuvre.

Après avoir parcouru le premier échangeur thermique 7, le fluide réfrigérant FR arrive au quatrième point de raccordement 42. Il passe dans la quatrième branche 40 du fait de la fermeture du troisième dispositif d'arrêt 50 et de l'ouverture du deuxième dispositif d'arrêt 46. Il traverse ce dernier avant d'emprunter le deuxième dispositif d'accumulation 38. En aval du deuxième dispositif d'accumulation 38, le fluide réfrigérant FR traverse le premier clapet anti-retour 47 avant de rejoindre le cinquième point de raccordement 44. Le cinquième point de raccordement 44 est ainsi un point de convergence du fluide réfrigérant FR en provenance de la quatrième branche 40 et de la deuxième branche 22 du circuit 3. Ce cinquième point de raccordement 44 oriente le fluide réfrigérant FR vers l'entrée secondaire 14 de l'éjecteur 12.

Au premier point de raccordement 21, le fluide réfrigérant FR en provenance de la première branche 20 et celui issu de la première sortie 33 du premier dispositif d'accumulation 28 convergent. Le fluide réfrigérant FR circule alors dans la deuxième passe 11 de l'échangeur de chaleur interne 9 avant de rejoindre le dispositif de compression 6, tel que précédemment décrit.

Pour mettre en œuvre le mode de réalisation présenté en figure 5, la circulation du fluide réfrigérant FR est dépendante de l'ouverture du deuxième dispositif d'arrêt 46 et du premier dispositif d'arrêt 45 et de la fermeture du troisième dispositif d'arrêt 50.

On comprend de ce qui précède que la présente invention permet ainsi d'assurer efficacement et de façon ciblée le traitement thermique par refroidissement d'un dispositif de stockage électrique pouvant être rechargé par charge rapide, tel qu'une batterie ou un pack de batteries, configuré pour fournir une énergie électrique à au moins un moteur électrique d'entraînement du véhicule. La présente invention a par ailleurs pour avantage de permettre le traitement thermique d'un habitacle par refroidissement ou chauffage d'un flux d'air intérieur envoyé dans l'habitacle, ce traitement thermique pouvant être simultané au refroidissement opéré sur le dispositif de stockage électrique.

L'invention ne saurait toutefois se limiter aux moyens et configurations décrits et illustrés ici, et elle s'étend également à tous moyens ou configurations équivalents tels que définis dans les revendications annexées.

## Revendications

1. Circuit (3) de fluide réfrigérant (FR) d'un véhicule comprenant au moins un dispositif de compression (6) de fluide réfrigérant (FR), un éjecteur (12) de fluide réfrigérant (FR) comprenant au moins une entrée primaire (13), une entrée secondaire (14) et une sortie (15), le circuit (3) de fluide réfrigérant (FR) comprenant un premier échangeur thermique (7) agencé pour être traversé par un flux d'air extérieur (FE) à un habitacle du véhicule, un deuxième échangeur thermique (26) agencé pour être traversé par un flux d'air intérieur (FA) envoyé dans l'habitacle, un échangeur de chaleur (23) couplé thermiquement à un dispositif de stockage électrique (2) du véhicule, au moins un dispositif d'accumulation (28), **caractérisé en ce que** le circuit (3) de fluide réfrigérant (FR) comprend une première branche (20) porteuse de l'échangeur de chaleur (23) et une deuxième branche (22) raccordée à l'entrée secondaire (14) de l'éjecteur (12) et qui comporte le dispositif d'accumulation (28) ainsi que le deuxième échangeur thermique (26), la première branche (20) et la deuxième branche (22) étant disposées en parallèle l'une par rapport à l'autre.

2. Circuit (3) de fluide réfrigérant (FR) selon la revendication 1, comprenant un dispositif de contrôle (16) apte à répartir le fluide réfrigérant (FR) entre la première branche (20) et la deuxième branche (22).

3. Circuit (3) de fluide réfrigérant (FR) selon la revendication précédente, dans lequel le dispositif de contrôle (16) comprend une entrée (17) apte à recevoir le fluide réfrigérant (FR) en provenance de la sortie (15) de l'éjecteur (12), une première sortie (18) apte à alimenter une entrée (24) de l'échangeur de chaleur (23) et une deuxième sortie (19) apte à alimenter la deuxième branche (22).

4. Circuit (3) de fluide réfrigérant (FR) selon l'une quelconque des revendications précédentes, comprenant un troisième échangeur thermique (27) agencé pour être traversé par le flux d'air intérieur (FA) et disposé sur la deuxième branche (22) entre l'éjecteur (12) et le dispositif d'accumulation (28).

5. Circuit (3) de fluide réfrigérant (FR) selon la revendication précédente, dans lequel le troisième échangeur thermique (27), du point de vue du flux d'air intérieur (FA), est en amont du deuxième échangeur thermique (26).

6. Circuit (3) de fluide réfrigérant (FR) selon l'une quelconque des revendications précédentes, dans lequel une sortie (25) de l'échangeur de chaleur (23) et une première sortie (33) du dispositif d'accumulation (28) convergent en un premier point de raccordement (21).

7. Circuit (3) de fluide réfrigérant (FR) selon l'une quelconque des revendications précédentes, comprenant un quatrième échangeur thermique (52) configuré pour traiter thermiquement le flux d'air intérieur (FA) et disposé dans une troisième branche (39) qui s'étend entre une sortie (8) du dispositif de compression (6) et l'entrée primaire (13) de l'éjecteur (12).

8. Circuit (3) de fluide réfrigérant (FR) selon la revendication précédente, comprenant un premier organe de détente (29) disposé dans la deuxième branche (22) entre le dispositif d'accumulation (28) et le deuxième échangeur thermique (26) et un deuxième organe de détente (37) disposé entre le quatrième échangeur thermique (52) et le premier échangeur thermique (7).

9. Circuit (3) de fluide réfrigérant (FR) selon l'une quelconque des revendications précédentes, comprenant le dispositif d'accumulation (28), appelé premier dispositif d'accumulation (28), et un deuxième dispositif d'accumulation (38) disposé entre le premier échangeur thermique (7) et l'entrée secondaire (14) de l'éjecteur (12).

10. Système de traitement thermique (1) d'un véhicule comprenant le circuit (3) de fluide réfrigérant (FR) selon l'une quelconque des revendications précédentes et une boucle de circulation (4) de fluide caloporteur (FC) comprenant un cinquième échangeur thermique (53) configuré pour échanger thermiquement avec au moins un dispositif de stockage électrique (2) du véhicule, l'échangeur de chaleur (23) étant configuré pour être parcouru par le fluide réfrigérant (FR) et par le fluide caloporteur (FC).

11. Procédé de contrôle d'une puissance de refroidissement délivrée par un circuit (3) de fluide réfrigérant (FR) selon les revendications 1 à 9, **caractérisé en ce qu'**on agit sur un débit de fluide réfrigérant (FR) circulant dans la première branche (20) pour contrôler la puissance de refroidissement du circuit (3) de fluide réfrigérant (FR).

12. Procédé selon la revendication précédente, comprenant une étape préalable de mise en charge rapide du dispositif de stockage électrique (2).

## Patentansprüche

1. Kreislauf (3) für Kühlfluid (FR) eines Fahrzeugs umfassend mindestens eine Vorrichtung zur Verdichtung (6) von Kühlfluid (FR), einen Ejektor (12) für Kühlfluid (FR), der mindestens einen Primäreinlass (13), einen Sekundäreinlass (14) und einen Auslass (15) umfasst, wobei der Kreislauf (3) für Kühlfluid (FR) einen ersten Wärmeaustauscher (7), der angeordnet ist, von einem Strom von Luft außerhalb (FE) eines Fahrzeuginnenraums durchströmt zu werden, einen zweiten Wärmeaustauscher (26), der angeordnet ist, von einem Innenluftstrom (FA) durchströmt zu werden, der in den Innenraum geleitet wird, einen Wärmetauscher (23), der thermisch an eine elektrische Speicherungsvorrichtung (2) des Fahrzeugs gekoppelt ist, mindestens eine Akkumulationsvorrichtung (28) umfasst, **dadurch gekennzeichnet, dass** der Kreislauf (3) für Kühlfluid (FR) einen ersten Zweig (20), der den Wärmetauscher (23) trägt, und einen zweiten Zweig (22) umfasst, der an den Sekundäreinlass (14) des Ejektors (12) angeschlossen ist und die Akkumulationsvorrichtung (28) sowie den zweiten Wärmeaustauscher (26) aufweist, wobei der erste Zweig (20) und der zweite Zweig (22) parallel zueinander angeordnet sind.

2. Kreislauf (3) für Kühlfluid (FR) nach Anspruch 1, umfassend eine Steuervorrichtung (16), die geeignet ist, das Kühlfluid (FR) zwischen dem ersten Zweig (20) und dem zweiten Zweig (22) zu verteilen.

3. Kreislauf (3) für Kühlfluid (FR) nach dem vorhergehenden Anspruch, wobei die Steuervorrichtung (16) einen Einlass (17), der geeignet ist, das Kühlfluid (FR) vom Auslass (15) des Ejektors (12) zu empfangen, einen ersten Auslass (18), der geeignet ist, einen Einlass (24) des Wärmetauschers (23) zu speisen, und einen zweiten Auslass (19), der geeignet ist, den zweiten Zweig (22) zu speisen, umfasst.

4. Kreislauf (3) für Kühlfluid (FR) nach einem der vorhergehenden Ansprüche, umfassend einen dritten Wärmeaustauscher (27), der angeordnet ist, vom Innenluftstrom (FA) durchströmt zu werden, und auf dem zweiten Zweig (22) zwischen dem Ejektor (12) und der Akkumulationsvorrichtung (28) angeordnet ist.

5. Kreislauf (3) für Kühlfluid (FR) nach dem vorhergehenden Anspruch, wobei sich der dritte Wärmeaustauscher (27) aus der Sicht des Innenluftstroms (FA) stromauf des zweiten Wärmeaustauschers (26) befindet.

6. Kreislauf (3) für Kühlfluid (FR) nach einem der vorhergehenden Ansprüche, wobei ein Auslass (25) des Wärmetauschers (23) und ein erster Auslass (33) der Akkumulationsvorrichtung (28) an einem ersten Anschlusspunkt (21) zusammenlaufen.

7. Kreislauf (3) für Kühlfluid (FR) nach einem der vorhergehenden Ansprüche, umfassend einen vierten Wärmeaustauscher (52), der dazu ausgebildet ist, den Innenluftstrom (FA) thermisch zu behandeln, und in einem dritten Zweig (39) angeordnet ist, der sich zwischen einem Auslass (8) der Verdichtungsvorrichtung (6) und dem Primäreinlass (13) des Ejektors (12) erstreckt.

8. Kreislauf (3) für Kühlfluid (FR) nach dem vorhergehenden Anspruch, umfassend ein erstes Ausdehnungselement (29), das im zweiten Zweig (22) zwischen der Akkumulationsvorrichtung (28) und dem zweiten Wärmeaustauscher (26) angeordnet ist, und ein zweites Ausdehnungselement (37), das zwischen dem vierten Wärmeaustauscher (52) und dem ersten Wärmeaustauscher (7) angeordnet ist.

9. Kreislauf (3) für Kühlfluid (FR) nach einem der vorhergehenden Ansprüche, umfassend die Akkumulationsvorrichtung (28), die erste Akkumulationsvorrichtung (28) genannt wird, und eine zweite Akkumulationsvorrichtung (38), die zwischen dem ersten Wärmeaustauscher (7) und dem Sekundäreinlass (14) des Ejektors (12) angeordnet ist.

10. Wärmebehandlungssystem (1) eines Fahrzeugs umfassend den Kreislauf (3) für Kühlfluid (FR) nach einem der vorhergehenden Ansprüche und eine Durchströmungsschleife (4) für Wärmeübertragungsfluid (FC), die einen fünften Wärmeaustauscher (53) umfasst, der zum Wärmeaustausch mit mindestens einer elektrischen Speicherungsvorrichtung (2) des Fahrzeugs angeordnet ist, wobei der Wärmetauscher (23) dazu ausgebildet ist, vom Kühlfluid (FR) und vom Wärmeübertragungsfluid (FC) durchströmt zu werden.

11. Verfahren zur Steuerung einer Kühlleistung, die von einem Kreislauf (3) für Kühlfluid (FR) nach den Ansprüchen 1 bis 9 geliefert wird, **dadurch gekennzeichnet, dass** auf einen Durchsatz von Kühlfluid (FR) eingewirkt wird, das im ersten Zweig (20) strömt, um die Kühlleistung des Kreislaufs (3) für Kühlfluid (FR) zu steuern.

12. Verfahren nach dem vorhergehenden Anspruch, umfassend einen vorhergehenden Schritt des Schnellladens der elektrischen Speicherungsvorrichtung (2).

## Claims

1. Refrigerant (RF) circuit (3) for a vehicle comprising at least one refrigerant (RF) compression device (6), a refrigerant (RF) ejector (12) comprising at least one primary inlet (13), one secondary inlet (14) and one outlet (15), the refrigerant (RF) circuit (3) comprising a first thermal exchanger (7) arranged such that a flow of exterior air (EF) outside a vehicle interior can pass therethrough, a second thermal exchanger (26) arranged such that a flow of interior air (IF) guided into the vehicle interior can pass therethrough, a heat exchanger (23) thermally coupled to an electrical storage device (2) of the vehicle, at least one accumulation device (28), **characterized in that** the refrigerant (RF) circuit (3) comprises a first branch (20) supporting the heat exchanger (23) and a second branch (22) connected to the secondary inlet (14) of the ejector (12) and comprising the accumulation device (28) as well as the second thermal exchanger (26), the first branch (20) and the second branch (22) being arranged parallel to each other.

2. Refrigerant (RF) circuit (3) according to Claim 1, comprising a control device (16) able to distribute the refrigerant (RF) between the first branch (20) and the second branch (22).

3. Refrigerant (RF) circuit (3) according to the preceding claim, wherein the control device (16) comprises an inlet (17) able to receive the refrigerant (RF) originating from the outlet (15) of the ejector (12), a first outlet (18) able to feed an inlet (24) of the heat exchanger (23) and a second outlet (19) able to feed the second branch (22).

4. Refrigerant (RF) circuit (3) according to any one of the preceding claims, comprising a third thermal exchanger (27) arranged such that a flow of interior air (IF) can pass therethrough and arranged on the second branch (22) between the ejector (12) and the accumulation device (28).

5. Refrigerant (RF) circuit (3) according to the preceding claim, wherein the third thermal exchanger (27), in terms of the interior air flow (IF), is upstream of the second thermal exchanger (26).

6. Refrigerant (RF) circuit (3) according to any one of the preceding claims, wherein an outlet (25) of the heat exchanger (23) and a first outlet (33) of the accumulation device (28) converge at a first connection point (21).

7. Refrigerant (RF) circuit (3) according to any one of the preceding claims, comprising a fourth thermal exchanger (52) configured to thermally treat the interior air flow (IF) and arranged in a third branch (39), which extends between an outlet (8) of the compression device (6) and the primary inlet (13) of the ejector (12).

8. Refrigerant (RF) circuit (3) according to the preceding claim, comprising a first expansion component (29) arranged in the second branch (22) between the accumulation device (28) and the second thermal exchanger (26) and a second expansion component (37) arranged between the fourth thermal exchanger (52) and the first thermal exchanger (7).

9. Refrigerant (RF) circuit (3) according to any one of the preceding claims, comprising the accumulation device (28), called first accumulation device (28), and a second accumulation device (38) arranged between the first thermal exchanger (7) and the secondary inlet (14) of the ejector (12).

10. Thermal treatment system (1) for a vehicle comprising the refrigerant (RF) circuit (3) according to any one of the preceding claims and a heat transfer fluid (HT) circulation loop (4) comprising a fifth thermal exchanger (53) configured to thermally exchange with at least one electrical storage device (2) of the vehicle, the heat exchanger (23) being configured for the refrigerant (RF) and the heat transfer fluid (HT) to pass therethrough.

11. Method for controlling the cooling power delivered by a refrigerant (RF) circuit (3) according to Claims 1 to 9, **characterized in that** a flow of refrigerant (RF) circulating in the first branch (20) is manipulated to control the cooling power of the refrigerant (RF) circuit (3) .

12. Method according to the preceding claim, comprising a previous step of rapid charging of the electrical storage device (2).
